# EUROPEAN PATENT SPECIFICATION

(11) **EP 1 095 793 B1**
(45) Date of publication and mention of the grant of the patent: **02.06.2004**
(21) Application number: 00309354.9
(22) Date of filing: 24.10.2000
(51) Int. Cl.: B60C 9/02, B60C 9/20, B60C 9/00, D07B 1/06

(54) **Metallic cord and pneumatic tyre employing the metallic cord**
Metallkord und Luftreifen mit demselben
Cable métallique et bandage pneumatique muni d'un tel cable

(30) Priority: 25.10.1999 JP 30246299
(43) Date of publication of application: 02.05.2001
(73) Proprietor: SUMITOMO RUBBER INDUSTRIES LIMITED, Kobe-shi, Hyogo-ken (JP)
(72) Inventor: Miyazaki, Shinichi, c/o Sumitomo Rubber Ind. Ltd., Kobe-Shi, Hyogo-ken (JP); Toda, Osamu, c/o Sumitomo Rubber Ind. Ltd., Kobe-Shi, Hyogo-ken (JP)
(74) Representative: Manitz, Finsterwald & Partner

(56) References cited:
- EP-A- 0 732 225
- DE-A- 4 120 554
- DE-A- 4 125 887
- PATENT ABSTRACTS OF JAPAN vol. 1999, no. 04, 30 April 1999 (1999-04-30) & JP 11 021776 A (TOKYO SEIKO CO LTD), 26 January 1999 (1999-01-26)
- PATENT ABSTRACTS OF JAPAN vol. 1999, no. 02, 26 February 1999 (1999-02-26) & JP 10 292275 A (BRIDGESTONE CORP), 4 November 1998 (1998-11-04)

## Description

### BACKGROUND OF THE INVENTION

### Field of the Invention

The present invention relates to a metallic cord for reinforcing a tyre and a pneumatic tyre employing the metallic cord for a belt layer and/or a carcass.

### Description of the Prior Art

Important objects for a pneumatic radial tyre, particularly a radial tyre for a passenger care are the reduction of rolling resistance, improvement of durability, reduction of the manufacturing cost, and improvement in comfortableness of the car.

The characteristics of the belt layer, particularly those of the cord embedded in the belt layer and the rigidity of the belt layer exert remarkable influence on improvement of the aforementioned performance.

For example, Japanese Utility Model Laying Open No. 63-19404 (1988) proposes a technique of reducing the rolling resistance of a tyre by employing not a cord but a steel wire material for a belt layer. In such a tyre, however, the steel wire material is disadvantageously broken when a car provided with the tyre carries out repeated sharp turns.

The rigidity of the belt layer dominates the deformation of the belt layer when a car provided with the tyre is in motion, and influences the basic performance and durability of the tyre. In particular, the rigidity of the belt layer influences the rolling resistance, high-speed driving performance and cornering performance as well as belt end separation resulting from cracking between plies in the edge region of the belt layer caused by loads applied to the tyre when the car is in motion. Therefore, prescribed rigidity of the belt layer must be ensured. Belt edge separation is caused by growth of cracking or rubber resulting from stress concentrating on the edge portion of the belt layer due to repetitive deformation of the belt layer when a car provided with the tyre is in motion, particularly deformation of the belt layer upon cornering. Therefore, resistance to such belt edge separation is important for attaining durability of the tyre.

On the other hand, a pneumatic radial tyre for a truck or a bus used under severe conditions with high load and high-speeds must keep at high levels the strength of not only the cords of the belt layer but also the carcass ply cord. In general, the carcass of such a radial tyre for a truck or a bus is high in transverse rigidity in order to maintain steering stability but it subjected to repetitive deformation following high-speed driving under a high load. Therefore, the carcass cord is formed by steel cord, in order to satisfy the requirements for strength and durability to sufficiently withstand such distortion/deformation.

In general, a single-layer stranded structure or a multilayer stranded structure of 7 x 4, 3 + 7 or 3 + 8 + 13 is employed for the carcass cord of this type of tyre. When such a cord densely charged with steel wires is embedded in carcass rubber, however, rubber insufficiently penetrates into the steel cord. Therefore, if the sidewall portion is damaged by sharp stones or rocks during driving, for example, and water penetrates through the damaged portion, this portion serves as a starting point for diffusing moisture through spaces in the steel cord and thus spreads rust. Consequently, adhesion between the steel cord and the rubber is deteriorated and the steel cord is broken to reduce the durability of the tyre.

Further, the aforementioned steel cord having a complicated structure requires complicated manufacturing steps, resulting in a high manufacturing cost for the metallic cord.

In order to solve these problems, there have been proposed so-called open or loosed cords formed by stranding steel wires while defining a clearance therebetween and a steel cord prepared by stranding formed steel wires and defining a clearance between the wires for improving penetrability of the rubber into the cord. However, such a steel cord requires a forming step as well as a stranding step for the steel wires again resulting in a high manufacturing cost for the steel cord, and the steel wires may come apart from each other in the step of moulding the tyre thus damaging uniformity and durability of the tyre produced.

In order to solve this problem, each of Japanese Patent Laying-Open Nos. 10-292275 (1998) and 10-292276 (1998), for example, employs an unstranded metallic cord. However, cord wire materials forming the unstranded metallic cord not shaped as a cord disadvantageously come apart from each other in the tyre moulding step causing problems.

Japanese Patent Laying-Open No. 11-21776 (1999), corresponding to the preamble of claim 1, discloses binding unstranded cords with a wrapping wire. However, the wrapping wire bundling and shaping a plurality of steel wires locally rubs the steel wires to reduce durability. Prevention of such rubbing is difficult since shaping performance is reduced when the cords are loosely bundled.

### SUMMARY OF THE INVENTION

An object of the present invention is to provide a metallic cord for reinforcing a tyre mouldable in a tyre manufacturing step without complicating operations and keeping strength by reducing rusting and a pneumatic tyre employing the metallic cord for a belt layer and/or a carcass and having excellent durability and rolling resistance.

Accordingly the present invention provides a metallic cord for reinforcing a tyre, formed by shaping a bundle prepared by assembling together a plurality of parallel metallic wires having substantially circular sections in an unstranded state with a binder of a polymer material having a melting point of 50°C to 200°C.

The said polymer material is preferably low-density polyethylene or medium-density polyethylene. The diameters of the said metallic wires are preferably 0.15 to 0.3 mm. The said binder may be formed by a cord, a tape-like material or a string-type material.

The present invention also provides a pneumatic tyre having a framework of a carcass toroidally extending between a pair of bead portions with a crown portion of the carcass reinforced with a belt layer consisting of at least two plies, wherein at least one ply of the belt layer is formed by embedding a metallic cord obtained by shaping a bundle prepared by paralleling a plurality of metallic wires having substantially circular sections in an unstranded state with a binder of a polymer material having a melting point of 50°C to 200°C in rubber.

The present invention further provides a pneumatic tyre having a framework of a carcass toroidally extending between a pair of bead portions wherein the carcass is reinforced by embedding metallic cords obtained by shaping a bundle prepared by paralleling a plurality of metallic wires having substantially circular sections in an unstranded state with a binder of a polymer material having a melting point of 50°C to 200°C in rubber.

The foregoing and other objects, features, aspects and advantages of the present invention will become more apparent from the following detailed description of the present invention when taken in conjunction with the accompanying drawings:

### BRIEF DESCRIPTION OF THE DRAWINGS

Figures 1 and 2 schematically illustrate metallic cords according to embodiments of the present invention;
Figure 3 is a sectional view showing the right half of a pneumatic tyre for a passenger car according to the present invention; and
Figure 4 is a sectional view showing the right half of a pneumatic tyre for a truck or a bus according to the present invention.

### DESCRIPTION OF THE PREFERRED EMBODIMENTS

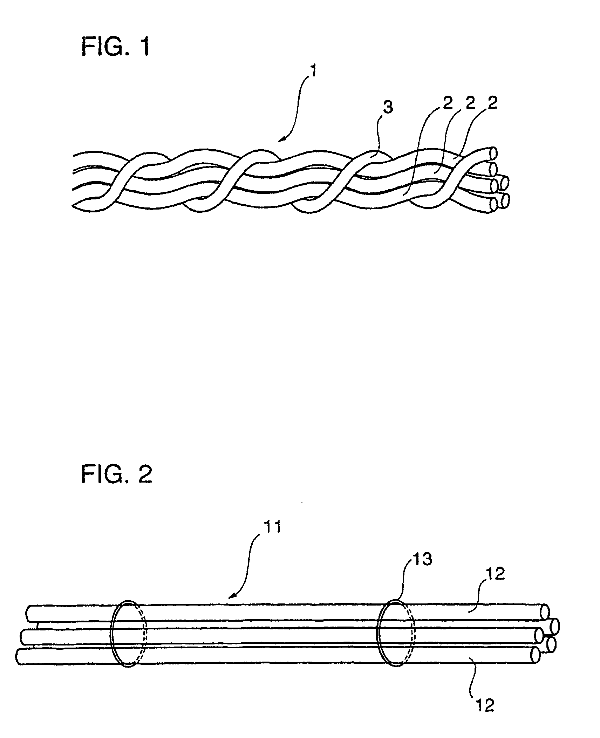

Embodiments of the present invention are now described with reference to the drawings. Figure 1 schematically illustrates a metallic cord 1 formed by bundling a plurality of, e.g. two to fifteen, preferably two to ten (five in Figure 1) metallic wires such as steel wires 2, for example, in an unstranded state and shaping the bundle with a binder 3 of a polymer material. The steel wires 2 are wavily or spirally formed. While all wires 2 can be wavily or spirally formed at the same pitch, wavy or spiral steel wires having different shapes and different pitch phases can arbitrarily be combined with each other at need. In this case, a constant clearance is defined between the steel wires for further improving penetration of rubber and reinforcing adhesion between the rubber and the metallic cord 1 when the metallic cord 1 is embedded for a belt layer.

The steel wires 2 forming the metallic cord 1 can have substantially circular sectional shapes, i.e. circular, elliptic or flat oval shapes. When applied to the belt layer, the diameters of the steel wires 2 are preferably 0.15 to 0.40 mm. When the steel wires 2 have elliptic or flat oval sections, the average lengths and breadths are within the range of 0.15 to 0.40 mm. When set in the aforementioned range of the diameters, the steel wires 2 can supply proper rigidity to the belt layer and reduce rolling resistance as well as separation of edges of the belt layer. It is also possible to combine a plurality of types of steel wires having different diameters within the aforementioned range with each other.

When applied to a carcass, on the other hand, the diameters of the steel wires 2 are preferably 0.15 to 0.30 mm. When set in the aforementioned range of the diameters, the steel wires 2 can supply proper transverse rigidity to the carcass and maintain steering stability in high-speed driving.

After the plurality of steel wires 2 are bundled in an unstranded state, the metallic cord 1 is shaped with the binder 3 of the polymer material. The binder 3 of the polymer material can preferably be prepared from thermoplastic resin having a melting point of 50°C to 200°C such as low-density polyethylene (melting point: 102 to 112°C), medium-density polyethylene (melting point: 110 to 120°C) or polypropylene (melting point: about 165°C), for example. A moulded tyre is made in a curing mould at a temperature condition of 150°C to 200°C. Therefore, the binder 3 of the polymer material holds the steel wires 2 so they do not to come apart from each other in the tyre moulding step. Under the curing condition, on the other hand, the binder 3 is melted to release the steel wires 2 from each other so that rubber readily penetrates into the clearance between the steel wires 2. The polymer material forming the binder 3 then diffuses into the peripheral rubber in the curing step. If the melting point of the binder 3 exceeds 200°C, therefore, the binder 3 is not melted under the curing condition, the rubber insufficiently penetrates into the metallic cord 1 and the required effects cannot be expected. If the melting point of the binder 3 of the polymer material is less than 50°C, the binder 3 flows upon a slight temperature rise in a tyre manufacturing step and cannot provide the holding/shaping function. Therefore, the melting point of the binder 3 is preferably 100°C to 200°C.

The binder 3 can be formed by working the aforementioned polymer material into the shape of a tape of 5 to 20 mm in width, a string or fibre or stranding a plurality of fibrous materials into a cord, or may have a shape selected from various ones.

The binder 3, shaping the plurality of steel wires 2 by spirally wrapping the plurality of bundled steel wires 2 in the longitudinal direction as shown in Figure 1, may alternatively partially bind the steel wires 2 along the longitudinal direction.

Figure 2 shows a metallic cord 11 according to another embodiment of the present invention.

Referring to Figure 2, the metallic cord 11 is formed by assembling parallel metallic wires such as five straight steel wires 12, for example, and bundling the same in an unstranded states. Binders 13 shape the steel wires 12 at prescribed intervals along the longitudinal direction.

The steel wires 12 have sectional shapes and diameters within the aforementioned ranges, while steel wires 12 having different diameters can be combined with each other or the straight steel wires 12 can be combined with spiral or wavy steel wires. In this case, penetration of rubber into the metallic cord 11 is further improved.

The inventive metallic cord can be embedded in a belt layer for manufacturing a pneumatic tyre.

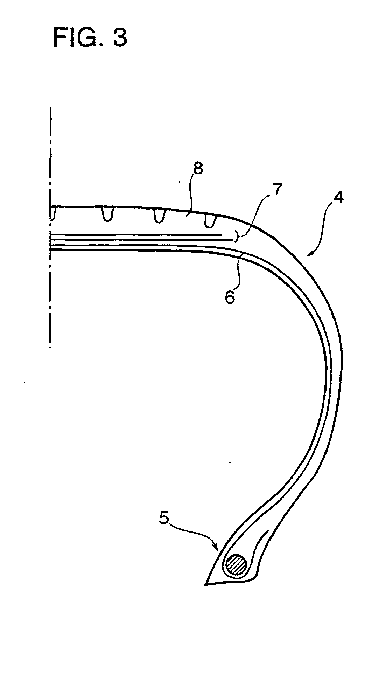

Figure 3 is a sectional view showing the right half of a pneumatic tyre 4 according to the present invention. Referring to Figure 3, the pneumatic tyre 4 has a framework or reinforcement comprising a carcass 6 toroidally extending between a pair of bead portions 5. A crown portion of the carcass 6 is reinforced by a belt layer 7 consisting of at least two plies and a tread portion 8 is arranged on the outer side of the belt layer 7 along the diametral direction of the tyre 4. The aforementioned metallic cord forms at least one of the plies of the belt layer 7.

While the metallic cord is preferably formed by two to fifteen metallic wires, two to six metallic wires are preferably applied to a belt layer of a radial tyre for a passenger car in general. In order to attain the prescribed rigidity of the belt layer with metallic cords each formed by a single metallic wire, the number of ends of the metallic cords must be increased in the ply. Therefore, the space between the metallic cords is so narrowed that rubber readily separates from the ends of the metallic cords in both edges of the belt layer. This propagates between adjacent metallic cords to readily induce separation of the ply on both edges of the belt layer.

When the number of metallic wires forming each metallic cord exceeds fifteen, on the other hand, the rigidity of the belt layer is excessively increased to deteriorate confortableness of a passenger car employing a radial tyre dedicated to a passenger car. When employing two to six metallic wires for each metallic cord of the aforementioned tyre for a passenger car, the count of the metallic cords in the belt layer is ten to fifty, preferably twenty to forty per width of 50 mm.

The metallic cord is embedded in rubber through a topping step for covering the metallic cord with rubber heated to 50°C to 120°C. In this case, the aforementioned binder may be melted so that the rubber readily penetrates into clearances between the metallic wires forming the metallic cord. The ply of the belt layer obtained in this manner has no such problem that the metallic wires come apart from each other in later steps.

In order to form the belt layer with plies, at least one of the plies is formed by the aforementioned metallic cord according to the present invention. When applied to a tyre for a passenger car, such metallic cords are arranged to intersect with each other in opposite directions at an angle of 10 to 30° along the circumferential direction of the tyre.

According to the present invention, such metallic cords are embedded in a carcass of a pneumatic radial tyre for a truck or a bus.

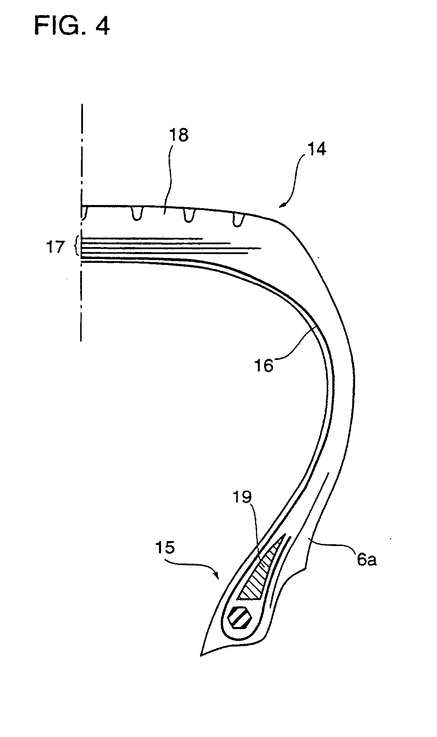

Figure 4 is a sectional view showing the right half of a pneumatic radial tyre 14 for a truck or a bus according to the present invention. Referring to Figure 4, the pneumatic radial tyre 14 for a truck or a bus has a framework of a carcass 16 toroidally extending between a pair of bead portions 15 and a crown portion of the carcass 16 is reinforced with a belt layer 17 consisting of four plies, while a tread portion 18 is arranged on the outer side of the belt layer 17 along the diametral direction of the tyre 14 and a bead apex 19 is arranged between the carcass 16 and its folded portion. The aforementioned metallic cords form the plies of the carcass 16.

While each metallic cord is preferably formed by two to fifteen metallic wires, five to ten metallic wires are preferably applied to the pneumatic radial tyre 14 for a truck or a bus in general. While the count of the metallic cords in the plies must be adjusted in order to supply prescribed rigidity to the carcass 16, the space between the metallic cords is narrowed if the number of wires forming each metallic cord is small to readily cause abrasion between the metallic cords or separation of rubber from an end 16a of the carcass 16. This propagates between adjacent ones of the metallic cords, to readily induce separation of the plies on the folded portion of the carcass 16.

When the number of metallic wires exceeds fifteen, on the other hand, it is difficult for the rubber to penetrate into central portions of the cords. When forming each metallic cord with two to ten metallic wires, the count of the metallic cords in the carcass 16 is ten to fifty-five, preferably twenty to forty per width of 50 mm.

The metallic cord forming the carcass 16 is embedded in the rubber through the aforementioned topping step. In this step, the metallic cord is covered with the rubber heated to 50°C to 120°C, similarly to the case of manufacturing the belt layer. In this case, the aforementioned binder is melted and the rubber readily penetrates into the clearances between the metallic wires forming the metallic cord. The plies of the carcass 16 obtained in this manner have no such problem that the metallic wires come apart from each other in a later step.

According to the present invention, the carcass 16 is formed by at least one ply having the embedded metallic cord arranged in a direction of 70° to 90° with respect to the circumferential direction of the tyre. A reinforcing layer of a steel cord, an aramid fibre cord, a polyester fibre cord or a nylon fibre cord can be arranged on the inner or outer side of the carcass 16 for reinforcing a bead portion or a sidewall portion.

The bead apex 19 arranged between the carcass 16 and its folded-up portion can be made of generally employed hard rubber, soft rubber or a combination of the hard rubber and the soft rubber. Further, a filler can be arranged in the vicinity of the upper end of the folded portion of the carcass 16 for reducing separation between the rubber and the metal.

In the pneumatic radial tyre 14 for a truck or a bus, the belt layer 17 is formed by four plies. In a structure generally employed for such a radial tyre for a truck or a bus, the plies are stacked at a cord angle in the range of 5 to 30° with respect to the circumferential direction of the tyre 14, for example, with the ply adjacent to the carcass 16 may be set to a cord angle of 40 to 70° while setting the cord angle of the remaining three plies at 5 to 30° in general. The belt layer 17, preferably formed by the metallic cord according to the present invention, may be formed by a generally employed steel cord or glass fibre, or a combination of such an inorganic fibre cord and an aramid fibre cord, a nylon fibre cord or a polyester fibre cord.

### Examples

### Example 1

Various types of steel cords were prepared from steel wires for manufacturing belt plies of radial tyres for passenger cars of 165/70SR13 in size and tyres for trucks or buses of 11R22.5 in size by way of trial in the structure shown in Figure 3 and Figure 4 with specifications shown in Table 1. These tyres were subjected to performance evaluation in the following methods. Table 1 also shows the results of the performance evaluation.

### (1) Rubber Penetrance

A sample steel cord was taken out from each tyre having a belt layer employing the steel cord with topping rubber adhering thereto. After removing the rubber from the surface of the steel cord as much as possible, two adjacent wires were removed from five or six wires forming the steel cord by sectionally cutting the steel cord with a knife. The length of a portion of a clearance defined between the two removed wires and the bundle of the remaining wires and completely filled up with rubber was measured over about 10 cm for regarding the ratio of the length of the portion filled with rubber to the total length as penetrance of rubber. This measurement was performed on ten samples, for regarding the average value as the measured value of the cord.

### (2) Rolling Resistance

Rolling resistance of each steel cord was measured according to SAE J 1269 and displayed with an index number with reference to rolling resistance of the prior art 1 (100). The rolling resistance is reduced in proportion to the index number.

### (3) Durability

Each tyre was combined with a prescribed rim, filled with a prescribed internal pressure and mounted to a car for repetitively driving along a figure-eight course formed by combining two circles of 14 m in diameter with each other 500 times. Thereafter the tyre was dismantled for counting the number of cut portions of a belt cord and displaying the durability with an index number with reference to the prior art 1 (100). A small index number indicates excellent durability with a small number of cut portions.

### (4) Economy

Each steel cord formed by unstranded wires was regarded as excellent in economy since a stranding step was omittable while each steel cord formed by stranded wires was regarded as inferior in economy.

### (5) Workability

Workability was regarded as excellent when the wires forming the steel cord did not come apart from each other during a tyre moulding step, while workability was regarded as inferior when the wires forming the steel cord cam apart from each other.

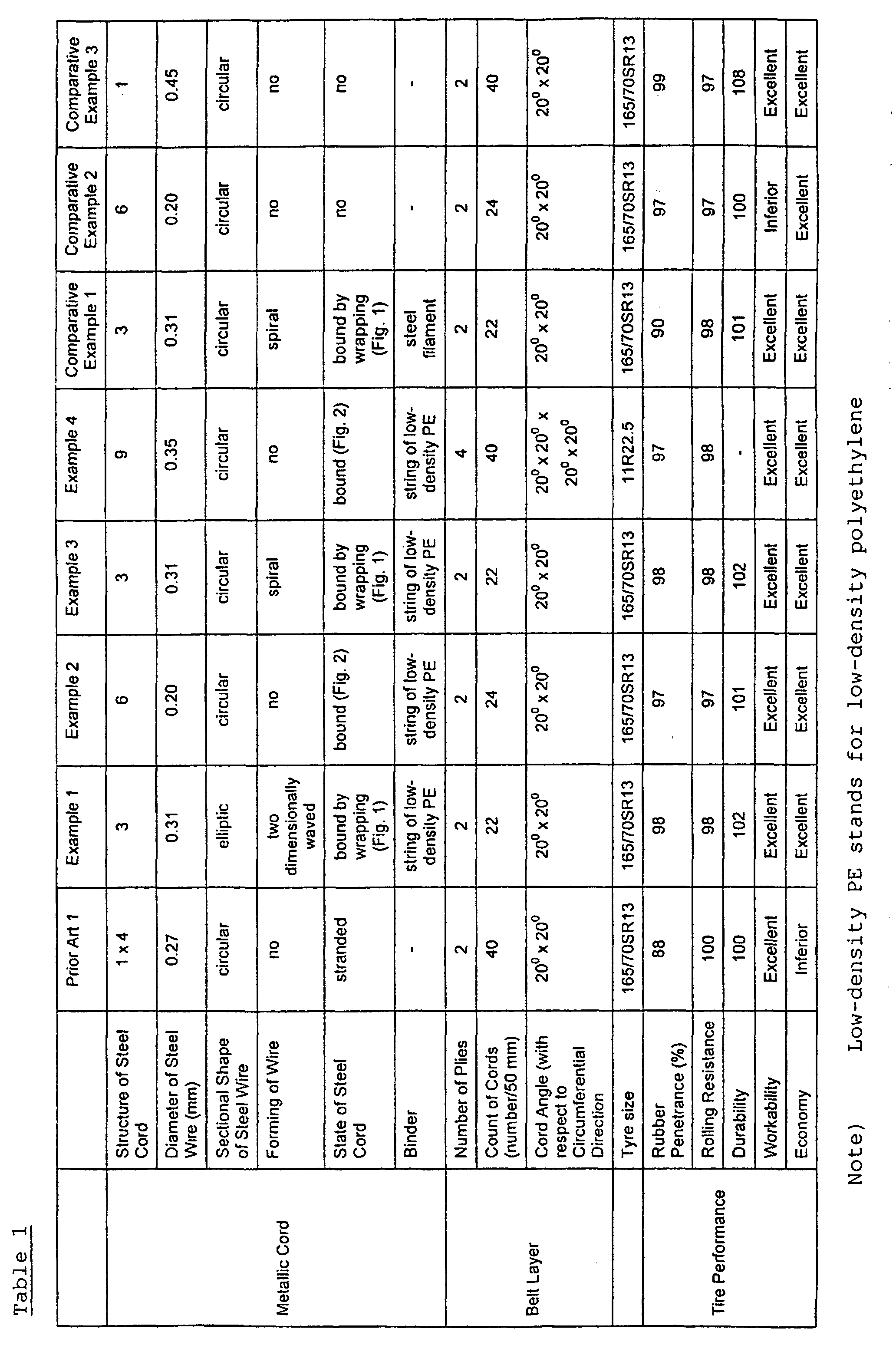

It is understood from Table 1 that the inventive metallic cords are excellent in rubber penetrance and the tyres employing the same are excellent in rolling resistance, durability, workability and economy in all Examples.

### Example 2

Various types of steel cords were prepared from steel wires for manufacturing tyres for trucks or busses of 11R22.5 in size by way of trial in the structure shown in Figure 4 with binders in specifications shown in Table 2. In each tyre, a cord angle of a carcass was 90° with respect to the circumferential direction. These tyres were subjected to performance evaluation in the following methods. Table 2 also shows the results of the performance evaluation.

### (1) Rusting Index Number after Driving

After driving by about 200,000 km each tyre was dismantled for observing a rusting situation of the metallic cord and displaying a rusting index number with reference to that of the prior art 2 (100). A small numeral value indicates small rusting.

### (2) Strength Retention after Driving

After driving by about 200,000 km each tyre was dismantled and the metallic cord was taken out for displaying strength retention with an index number with reference to the strength before driving (100). A small numeral value indicates excellent strength retention.

Rubber penetrance, economy and workability were evaluated by methods similar to those employed in Example 1.

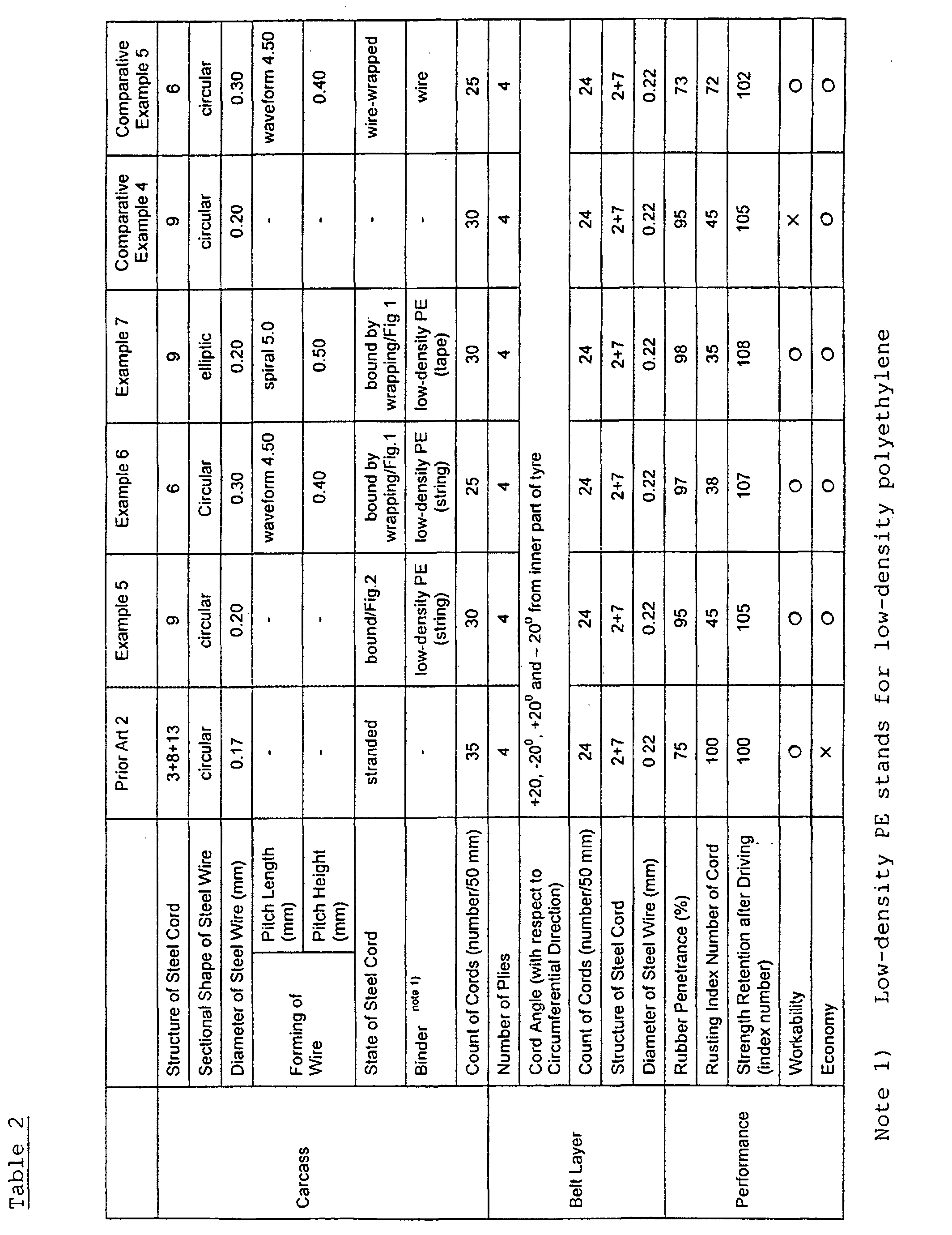

It is understood from Table 2 that Examples 5 to 7 according to the present invention are excellent in rubber penetrance as well as rusting index number and strength retention and workability and economy of tyres.

Although the present invention has been described and illustrated in detail, it is clearly understood that the same is by way of illustration and example only and is not to be taken by way of limitation, the spirit and scope of the present invention being limited only by the terms of the appended claims.

According to the present invention, as hereinabove described, a plurality of metallic wires are bundled in an unstranded state and shaped with a binder meltable in a topping step or a curing step for forming a metallic cord and applying the metallic cord to a belt layer, whereby penetration of rubber in the metallic cord is improved for improving characteristics such as rolling resistance and durability of a tyre.

## Claims

1. A metallic cord (1,11) for reinforcing a tyre, formed by shaping a bundle prepared by assembling together a plurality of parallel metallic wires (2,12) having substantially circular sections in an unstranded state with a binder (3,13), **characterized in that** said binder (3,13) is made of a polymer material having a melting point of 50°C to 200°C.

2. A metallic cord (1,11) for reinforcing a tyre (4,14) according to claim 1, wherein said polymer material is low-density polyethylene or medium-density polyethylene.

3. A metallic cord (1,11) for reinforcing a tyre (4,14) according to claim 1, wherein the diameters of said metallic wires (2,12) are 0.15 to 0.3 mm.

4. A metallic cord for reinforcing a tyre according to claim 1, wherein said binder (3,13) is a cord, a tape-like material or a string-like material.

5. A pneumatic tyre having a reinforcement framework comprising a carcass (6,16) extending between a pair of bead portions (5,15) and a crown region reinforced by a belt layer (7,17) consisting of two plies, **characterised in that** at least one ply of the belt layer (7,17) is formed by a metallic cord according to any of claims 1 to 4.

6. A pneumatic tyre having a reinforcement framework comprising a carcass (6,16) extending between a pair of bead portions (5,15) and a crown region reinforced by a belt layer (7,17), **characterised in that** the carcass is reinforced by a ply of metallic cords according to any of claims 1 to 4.

7. A pneumatic tyre according to claim 6, **characterised by** a belt layer (7,17) which is formed of metallic cords according to any one of claims 1 to 4.

## Patentansprüche

1. Metallkord (1, 11) zum Verstärken eines Reifens, der durch Formen eines Bündels gebildet ist, das hergestellt ist durch Zusammenbauen einer Vielzahl paralleler Metalldrähte (2, 12), die in einem nicht verseilten Zustand im Wesentlichen kreisförmige Querschnitte aufweisen, mit einem Binder (3, 13), **dadurch gekennzeichnet, dass** der Binder (3, 13) aus einem Polymermaterial mit einem Schmelzpunkt von 50°C bis 200°C hergestellt ist.

2. Metallkord (1, 11) zum Verstärken eines Reifens (4, 14) nach Anspruch 1, wobei das Polymermaterial Polyethylen niedriger Dichte oder Polyethylen mittlerer Dichte ist.

3. Metallkord (1, 11) zum Verstärken eines Reifens (4, 14) nach Anspruch 1, wobei die Durchmesser der Metalldrähte (2, 12) 0,15 bis 0,3 mm betragen.

4. Metallkord zum Verstärken eines Reifens nach Anspruch 1, wobei der Binder (3, 13) ein Kord, ein bandähnliches Material oder ein fadenähnliches Material ist.

5. Luftreifen mit einem Verstärkungsrahmen, der eine Karkasse (6, 16), die sich zwischen einem Paar Wulstabschnitten (5, 15) erstreckt, und einen Kronenbereich umfasst, der durch eine Gürtelschicht (7, 17) verstärkt ist, die aus zwei Lagen besteht, **dadurch gekennzeichnet, dass** mindestens eine Lage der Gürtelschicht (7, 17) durch einen Metallkord nach einem der Ansprüche 1 bis 4 gebildet ist.

6. Luftreifen mit einem Verstärkungsrahmen, der eine Karkasse (6, 16), die sich zwischen einem Paar Wulstabschnitten (5, 15) erstreckt, und einen Kronenbereich umfasst, der durch eine Gürtelschicht (7, 17) verstärkt ist, **dadurch gekennzeichnet, dass** die Karkasse durch eine Lage aus Metallkorden nach einem der Ansprüche 1 bis 4 verstärkt ist.

7. Luftreifen nach Anspruch 6, **gekennzeichnet durch** eine Gürtelschicht (7, 17), die aus Metallkorden nach einem der Ansprüche 1 bis 4 gebildet ist.

## Revendications

1. Câble métallique (1, 11) d'armature d'un pneumatique, formé par mise en forme d'un faisceau préparé par assemblage de plusieurs fils métallisés parallèles (2, 12) ayant des sections pratiquement circulaires à un état non torsadé à l'aide d'un liant (3, 13), **caractérisé en ce que** le liant (3, 13) est formé d'un matériau polymère ayant une température de fusion comprise entre 50 °C et 200 °C.

2. Câble métallique (1, 11) d'armature d'un pneumatique (4, 14) selon la revendication 1, dans lequel le matériau polymère est un polyéthylène basse densité ou un polyéthylène moyenne densité.

3. Câble métallique (1, 11) d'armature d'un pneumatique (4, 14) selon la revendication 1, dans lequel les diamètres des fils métalliques (2, 12) sont compris entre 0,15 et 0,3 mm.

4. Câble métallique (1, 11) d'armature d'un pneumatique selon la revendication 1, dans lequel le liant (3, 13) est un câble, un matériau en forme de ruban ou un matériau analogue à un cordon.

5. Pneumatique possédant une ossature d'armature comportant une carcasse (6, 16) .qui s'étend entre deux parties de talon (5, 15) et une région bombée armée par une couche de ceinture (7, 17) constituée de deux nappes, **caractérisé en ce qu'**une nappe au moins de la couche de ceinture (7, 17) est formée d'un câble métallique selon l'une quelconque des revendications 1 à 4.

6. Pneumatique possédant une ossature d'armature qui comporte une carcasse (6, 16) qui s'étend entre deux parties de talon (5, 15) et une région bombée armée par une couche de ceinture (7, 17), **caractérisé en ce que** la carcasse est armée par une nappe de câbles métalliques selon l'une quelconque des revendications 1 à 4.

7. Pneumatique selon la revendication 6, **caractérisé par** une couche de ceinture (7, 17) qui est formée de câbles métalliques selon l'une quelconque des revendications 1 à 4.
